# EUROPÄISCHE PATENTSCHRIFT

(11) **EP 4 325 831 B1**
(45) Veröffentlichungstag und Bekanntmachung des Hinweises auf die Patenterteilung: **02.04.2025**
(21) Anmeldenummer: 23191425.0
(22) Anmeldetag: 14.08.2023
(51) Int. Cl.: H04N 1/60

(54) **VERFAHREN ZUR DURCHFÜHRUNG VON TRANSFORMATIONEN VON FARBDATEN MIT TRANSFORMATIONSVORSCHRIFT**
METHOD FOR CARRYING OUT TRANSFORMATIONS OF COLOR DATA USING A TRANSFORMATION RULE
PROCÉDÉ POUR EFFECTUER DES TRANSFORMATIONS DE DONNÉES DE COULEUR AVEC UNE PRESCRIPTION DE TRANSFORMATION

(30) Priorität: 15.08.2022 EP 22020392
(43) Veröffentlichungstag der Anmeldung: 21.02.2024
(73) Patentinhaber: GMG GmbH & Co. KG, 72072 Tübingen (DE)
(72) Erfinder: Hoffstadt, Hanno, 89077 Ulm (DE)
(74) Vertreter: Rausch, Michael

(56) Entgegenhaltungen:
- US-A- 5 877 787
- US-A1- 2005 128 498
- US-A1- 2006 280 537

## Beschreibung

Die vorliegende Erfindung betrifft ein Verfahren zur Durchführung von Transformationen von Farbdaten von einem Quell-Farbraum mit n Farben in einen Ziel-Farbraum mit m Werten unter Nutzung einer Transformationsvorschrift TRV.

In der Druckindustrie werden sehr häufig Farbtransformationen benötigt, um die Datensätze für die zu druckenden farbigen Druckerzeugnisse herzustellen.

Ausgangspunkt sind digitale Layouts, die z. B. Farbbilder aus Fotografie oder Scan, Illustrationen und Text enthalten können. Diese Layouts sind Vorlagen, die entsprechend in Form von Druckerzeugnissen vervielfältigt werden sollen. Ein solches Layout ist in welcher Form auch immer entworfen oder entwickelt worden und repräsentiert von der farblichen Erscheinung her das, was für den jeweils vorgesehenen Zweck gewünscht wird. Ein Layout umfasst in der Regel mehrere Layout-Objekte. Jedes einzelne Layout-Objekt hat also eine farbliche Erscheinung, die sich eindeutig identifizieren lässt. Bekanntermaßen werden farbliche Erscheinungen durch die Mischung von nur wenigen Farben erzeugt, für Druckerzeugnisse beispielsweise durch einfaches Übereinanderdrucken von gerasterten Druckfarben, wobei jede Farbe durch ihre Wirkung einen gewissen Beitrag leistet und im Zusammenwirken der unterschiedlichen Farbschichten das Endergebnis erzeugt wird.

Die farbliche Erscheinung jedes einzelnen Layout-Objekts wird durch seine Farbwerte (von Bildpixeln, Konturfarben oder Füllfarben) definiert, die die Datenquelle darstellen. Im Falle von Bildpixeln handelt es sich oft um Millionen von Pixeln mit jeweils eigenen Farbwerten. Diese Quell-Farbwerte beziehen sich immer auf einen Quell-Farbraum mit einer bestimmten Anzahl von Farben. Das heißt, jedem Objekt im Layout ist ein Farbraum zugeordnet, der meist eine Beziehung zu einem Gerät hat, häufig ein ganz bestimmter RGB-Farbraum wie sRGB oder Adobe RGB, oder ein CMYK-Farbraum, nur Schwarz (Graustufen) oder ein anderer Druck-Farbraum. Die Objektfarbwerte sind entsprechend als RGB-Werte, CMYK- oder Graustufen-Werte (0-100% Farbe) oder andere Farbwerte beziffert. Die Gesamtanzahl der Gerätefarben des Quell-Farbraumes wird hier mit n bezeichnet.

Farbräume werden üblicherweise durch ICC-Farbprofile (ISO 15076-1:2010) beschrieben, Layouts durch PDF- und PDF/X-Dateien (ISO 15930-Serie), die diese ICC-Farbprofile enthalten oder referenzieren können.

Aus den unterschiedlichsten Gründen und Motiven soll das Layout reproduziert werden. Für die Reproduktion stehen die unterschiedlichsten Druckverfahren und Druckmaschinen zur Verfügung. Diese verfügen über die Möglichkeit, eine bestimmte Anzahl von Farben in einer bestimmten Art und Weise auf ein Trägermaterial aufzubringen. Dabei handelt es sich um die Gerätefarben des Drucksystems. Diese definieren bzw. sind Grundlage des Ziel-Farbraumes, der wiederum alle denkbaren Kombinationen der Gerätefarben des Drucksystems umfasst. Man spricht hier von den m Gerätefarben des Ziel-Farbraumes. Auch sind Transformationen in geräteunabhängige Werte oft notwendig, wie Lab- oder Spektralfarben (siehe unten), beispielsweise um die Ergebnisse späterer Messungen von Ausdrucken überprüfen zu können oder eine geräteunabhängige Datenbasis für die Darstellung auf beliebigen Geräten zur Verfügung zu stellen. Deshalb spricht man oberbegrifflich von den m Werten des Zielfarbraumes.

Üblicherweise stimmen der Quell-Farbraum und der Ziel-Farbraum nicht überein. Oft werden bei der Gestaltung des Layouts standardisierte Farbräume als Quell-Farbräume verwendet, aber der Druck findet mittels konkreter Ausgabesysteme mit ihrem individuell eigenen Farbverhalten statt. Daher ist es erforderlich, für jeden Rasterpunkt des Layouts die gegebene Kombination der n Gerätefarben des Quell-Farbraumes in eine für den Druck erforderliche Kombination der m Gerätefarben des Ziel-Farbraumes zu transformieren. Das Ziel ist dabei, durch den Druck ein Ergebnis zu erzeugen, welches der Vorlage, also dem digitalen Layout, möglichst nahekommt, also im Idealfall die gleiche Erscheinung beim Betrachter hervorruft.

Als Rasterpunkt oder Pixel wird jeder Punkt eines Layouts bezeichnet, der sich durch eine vorgegebene Rasterung der Layout-Objekte ergibt. Diese wiederum steht im Zusammenhang mit der sogenannten Auflösung der Darstellung etwa für die Erstellung der Druckform. Legt man über ein Layout ein Raster mit i Zeilen und j Spalten, so ergibt sich eine Auflösung von i x j Pixeln. Jedes einzelne Pixel kann nun hinsichtlich seiner farblichen Konstruktion identifiziert werden.

Farbtransformationen werden benutzt, um die Layoutdaten in druckfähige Daten für ein gewünschten Satz Druckfarben umzuwandeln. Dann entstehen z. B. einheitliche, reine CMYK-Daten für Offsetdruck. Außerdem werden Farbtransformationen benutzt, um die farbliche Erscheinung dieser Druckdaten verbindlich zu simulieren, bevor gedruckt wird. Die farbliche Erscheinung wird üblicherweise geräteunabhängig in dem CIELAB-Farbraum (kurz: Lab) oder mithilfe von spektralen Reflexionsfaktoren beschrieben. Man transformiert die Druckdaten mit ihrem zugeordneten Farbraum in diese geräteunabhängigen Farbdaten. Diese werden an einem kalibrierten Bildschirm oder mit speziellen Prüfdruck-Systemen dargestellt (ein sogenannter "Proof", meist mit Inkjet-Systemen). Verwandt damit ist die Aufgabe, Druckdaten für andere Druckverfahren anzupassen, d. h. aus existierenden Druckdaten durch eine Transformation neue Druckdaten für andere Druckfarben zu erzeugen und dabei den ursprünglichen Farbeindruck möglichst gut zu erhalten.

Bei den üblichen Druckvorgängen mit in der Regel nicht mehr als vier Farben sind diese Transformationsvorgänge weitgehend erschlossen und durch entsprechende Datensysteme standardisiert.

Jedoch wird beispielsweise im Verpackungsdruck sehr häufig mit mehr als 4 Druckfarben gedruckt. Traditionell werden Markenfarben als Schmuckfarben ergänzt und Bilder mit produktspezifischen Farben aufgebaut (z. B. Milchprodukte mit einer zusätzlichen hellgrauen Druckfarbe, Schokoladenprodukte mit verschiedenen braunen Druckfarben). Bei durchsichtigen Folienverpackungen wird oft weiße Druckfarbe zusätzlich eingesetzt. Jede benutzte Druckfarbe belegt dabei ein Druckwerk in der Druckmaschine und braucht eine eigene Druckform für die Farbübertragung. Die Farben werden nacheinander aufgetragen, und es sind prinzipiell alle Farben miteinander kombinierbar (überdruckbar). Die Gesamtheit der separaten Druckformen führt zu dem Ausdruck "Separation" als Verfahren bzw. Ergebnis der Erstellung der Druckdaten.

Maschinen mit 7-10 Farbwerken sind keine Seltenheit im Flexodruck, Offsetdruck und Tiefdruck. Designer für Markenartikel können die Druckfarben aus tausenden Sonderfarben auswählen, etwa aus über 2000 Farbtönen im PANTONE^{®} System. Diese Druckfarben werden von Farbherstellern produziert und geliefert. Im sogenannten Digitaldruck werden Inkjet- und tonerbasierte Druckmaschinen eingesetzt, die oft 6-8 Farbwerke enthalten, aber mit festen Druckfarbsätzen betrieben werden, da Inkjet-Tinten und farbige Toner oft sehr spezielle, maschinenabhängige Verarbeitungseigenschaften haben müssen oder der Wechsel technisch zu umständlich wäre. Typische Farbsätze enthalten CMYK ergänzt um Orange oder Rot, Grün, Blau oder Violett, Weiß.

Digitaldruckverfahren arbeiten zurzeit zwar langsamer als konventionelle Druckverfahren, da aber keine Druckformen erstellt werden müssen und Farben nicht gewechselt werden, ist der Aufwand zum Einrichten sehr viel geringer, und damit werden kleine Auflagen ökonomischer und personalisierter Druck möglich. Hier besteht daher der Wunsch, eine anfangs konventionell produzierte Verpackung nach Bedarf in Kleinauflagen oder gar personalisiert (Auflage 1) zu drucken, wobei aber die farbliche Erscheinung möglichst identisch mit den zuvor gedruckten Produkten sein soll, die mit individuellen Sonderfarben produziert wurden. Denn im Verkaufsregal können verschiedene Chargen nebeneinanderstehen. Um das zu erreichen, werden die für das konventionelle Druckverfahren vorliegenden Druckdaten aus dessen Quell-Farbraum in einen Ziel-Farbraum konvertiert, der das Digitaldruckverfahren beschreibt. Im Extremfall des variablen, personalisierten Druckens müssen für jedes Exemplar andere Quell-Daten transformiert werden, dann wird die Transformation zu einem Engpass.

Die eingangs erwähnten Farbtransformationen konvertieren also von einem Quell-Farbraum Q (beispielsweise mit n Gerätefarben) in einen anderen Ziel-Farbraum Z mit m Werten (beispielsweise Gerätefarben oder den 3 CIELAB-Werten L, a, b). Dies erfolgt durch Anwendung einer Transformationsvorschrift TRV. Dabei kann es sich um Rechenformeln, Transformations-Modelle oder bereits auf Basis der TRV erstellte Transformationstabellen handeln. Sie müssen oft pro Pixel angewendet werden, daher ist ein hoher Durchsatz wichtig (Millionen Pixel pro Sekunde). Um das zu erreichen, wird in einer angefertigten Tabelle interpoliert, wie zum Beispiel im ICC-Industriestandard. Die Tabelle ist für Kombinationen von n Farbwerten aufgebaut. Jede der n Eingangsfarben kann Werte zwischen 0 und 100% Farbauftrag annehmen. Die Tabelle kann nicht alle Kombinationen auflisten, sondern tastet jede Eingangsfarbe mit einer bestimmten vorgegebenen Auflösung ab. Sie ist ein regelmäßiges rechtwinkliges n-dimensionales Gitter, das alle Kombinationen der abgetasteten Stufen enthält. Dazwischen wird n-dimensional interpoliert. Die Genauigkeit hängt von der Abtastung ab. Typische Abtastungen sind für n=3 (RGB / Lab) 33 Stufen (33³ ≈ 36000 Tabelleneinträge), für n=4 (CMYK) 17 Stufen (alle 6.25%, 17⁴ ≈ 84000 Tabelleneinträge). Die Anzahl der Abstufungen ist die Basis der Potenz, die Anzahl n der Druckfarben steht im Exponenten. Bei der Erzeugung von Transformationstabellen handelt es sich um für den Fachmann geläufige Maßnahmen. Sie basieren beispielsweise auf der spektrometrischen Vermessung von gedruckten Farben, Berechnungen zur Abschätzung und/oder Interpolation und dergleichen.

Die Tabellengröße steigt exponentiell mit der Anzahl n der Eingangsfarben. Weil der Speicherplatz beschränkt ist, muss aus praktischen Gründen die Abtastung grober werden. Für den häufigen Fall n=7 werden oft nur noch 6 oder 7 Stufen verwendet. Ein Beispiel dafür ist das weit verbreitete Open-Source-Farbmanagementsystem LittleCMS, das 7 Stufen benutzt (alle 16.67%, 7⁷ ≈ 820000 Tabelleneinträge). Die Tabellenstruktur führt daher zu folgendem Problem: je mehr Druckfarben, desto größer ist die Tabelle, und desto weniger Abstufungen können gespeichert werden. Anwender erwarten bei CMYK + Zusatzfarben eine vergleichbare Genauigkeit, wie sie es von CMYK gewohnt sind. 7 Stufen sind erheblich zu grob.

Bekannte Lösungsansätze sind offenbart in der DE 10 2004 003 300 A1, wonach ZuordnungsTabellen, die mehr als vier Eingangs-Farbkomponenten haben, in mehrere Zuordnungstabellen mit maximal vier Eingangs-Farbkomponenten aufgeteilt werden. Mit dieser Technik soll das Problem der zu großen Zuordnungstabellen gelöst werden. Es handelt sich dabei um einen konkreten Vorschlag, dieses Problem zu lösen, indem konventionsgemäß grundsätzlich auf 4-Komponenten-Tabellen reduziert wird, da der Stand der Technik die zur seiner Zeit gültige Tatsache nutzt, dass auch in einem Sieben-Farbendruck üblicherweise nicht mehr als vier Farben an einer Stelle des Druckbogens übereinander gedruckt werden. Aus diesem Grunde wird auch die Reduktion auf 4-Komponenten-Tabellen forciert. Um dies im Zweifel sicherzustellen, werden zusätzliche Verfahren wie Gray Component Replacement (GCR) und Color Component Replacement (CCR) bei der Erstellung der Separationstabelle angewandt. Ein gleichartiger Stand der Technik ergibt sich aus Boll H:"A COLOR TO COLORANT TRANSFORMATION FOR A SEVEN INK PROCESS", PROCEEDINGS OF SPIE, IEEE, US, Bd. 2170, 1. Februar 1994 (1994-02-01), Seiten 108-118, und der US 5 892 891 A.

Bekannte Lösungsansätze verwenden ein Modell oder eine Kombination von Tabelle und Modell. Ein Modell ist eine meist mathematisch basierte Transformationsvorschrift. So kann der Lab-Farbwert eines Überdrucks aus den einzelnen Druckfarben geschätzt werden. Das geschieht z. B. bei der Darstellung von Layouts oder PDF-Dateien am Bildschirm und ist schnell, aber ungenau. In der ICC-Weiterentwicklung iccMAX wird vorgeschlagen, Einzelfarben spektral zu verrechnen, oder Tabellen für den CMYK-Anteil zu benutzen und deren Wert für jede weitere Farbe zu modifizieren. In allen Fällen ist das Hinzufügen einzelner Farben zu ungenau, weil es die Wechselwirkung der Farben in Überdrucken nicht oder unzureichend berücksichtigt, an denen diese Farben beteiligt sind.

Es gibt zwar genauere Modelle, die das Überdruckverhalten von Farbmischungen besser berechnen, aber die sind bei weitem nicht schnell genug, um für die Transformation von Millionen von Pixeln brauchbar zu sein. Außerdem liefern die Modelle Lab-Werte oder Spektren, aber keine Geräte-Farbwerte, sind also für direkte Transformation von Gerät zu Gerät ("device-link") nicht geeignet. Denn die auszugebenden Geräte-Farbwerte unterliegen oft speziellen Separationsregeln (s. u.) und brauchen für hohe Qualität meist eine besondere Aufbereitung. Die Transformation in Gerätefarben ist jedoch eine überaus häufige Anwendung.

Farbtransformationen werden oft auf hochdimensionale Räume angewendet. Diese treten sowohl auf der Eingabeseite als auch auf der Ausgabeseite auf.

Auf der Eingabeseite können es z. B. die Farbkombinationen eines Druckprozesses sein. Traditionell waren die Farben Cyan, Magenta, Gelb, Schwarz der Standard im Mehrfarbendruck. Seit einigen Jahren werden zusätzliche Farben zur Erweiterung der Buntheit eingesetzt, insbesondere sind Bestrebungen im Gange, den Siebenfarbdruck mit zusätzlichem Orange oder Rot, Grün, Blau oder Violett zu standardisieren (bekannt als ECG Printing = Expanded Color Gamut). Im Verpackungsdruck und in Spezialanwendungen wie Banknotendruck sind noch mehr Farben im Einsatz.

Auf der Ausgabeseite sind es m Werte, etwa CIELAB-Farbwerte (drei Komponenten), Druckfarbkombinationen eines Zielsystems oder auch spektrale Reflexionsfaktoren (mit Werten für Wellenlängenbereiche; z. B. m=31 Werte für 10 nm-Bänder von 400 bis 700 nm).

Eine häufige Anwendung ist die Vorhersage der erzielten Farbwirkung über die Reflexionsspektren (Ausgabeseite) von anteilig überdruckenden Farben (Eingabeseite) in einem industriellen Druckprozess. Erst mit der Kenntnis solcher Druck-Charakteristiken lassen sich weitere Transformationen bilden, die Daten von einem Druckprozess zu einem anderen farblich konsistent anpassen. Farbtransformationen basieren, wie ausgeführt, auf Tabellen oder auf Modellen.

Bei Modellen gibt es z. B. empirisch-mathematische Ansätze oder mechanistischphysikalische Simulationen des Farbverhaltens. In beiden Modellansätzen findet zwar eine Anpassung von Modellparametern statt, aber es besteht in der Regel eine Restabweichung zwischen dem Modell und der Realität, die man verringern möchte. Man möchte also das starre, den inneren Gesetzmäßigkeiten folgende Modell auf davon unabhängige Soll-Daten hin korrigieren.

Bei Tabellen, in den dann mehrdimensional interpoliert wird, ist man flexibler, da man die Einträge frei anpassen kann. Das Problem ist hier, dass mit zunehmender Anzahl n der Eingabedimensionen (Druckfarben) der Speicherplatz für die Farbkombinationen exponentiell zunimmt, so dass eine detaillierte Speicherung nicht mehr möglich ist. Ein Lösungsvorschlag ist, nur die Kombinationen zu speichern, die im Übereinanderdruck an der gleichen Stelle auftreten. Das sind meistens nur 4 überdruckende Farben. Folglich genügen einige 4-dimensionale Tabellen statt einer großen n-dimensionalen. Dennoch kann es geschehen, dass in der Farbverarbeitungskette gelegentlich mehr als 4 Farbanteile auftreten, die zu transformieren sind. Unser an anderer Stelle ausgeführter Vorschlag ist nun, die Ausgabewerte zu schätzen, indem aus den vorhandenen Tabellen mehrere Beiträge zusammengesetzt werden: man benutzt z. B. die größten 4-dimensionalen Beiträge und fügt die fehlenden Farben hinzu, indem man aus anderen Tabellen, in denen sie vorkommen, ihre farbliche Wirkung ermittelt und auf den großen 4-dimensionalen Ausgabewert anwendet. Dieses Schätzverfahren ist letztlich wieder ein einfaches Modell, das in der Regel eine Abweichung zur Realität hat. Eine direkte Anpassung ist aber nicht möglich, da es keine Tabellenplätze für mehr als 4 Dimensionen gibt.

Insofern ist es wünschenswert, die Ergebnisse einer Tabellen- oder Modellberechnung auf gegebene Sollwerte hin zu korrigieren. Die Korrektur soll dabei nicht nur punktuell wirken, sondern das gesamte Verhalten der Nachbarschaft weich mit anpassen.

Im Stand der Technik finden sich Korrekturverfahren, die Unterschiede zwischen Soll- und Istwerten kompensieren. In der US 2005/0128498 gibt es für manche gedruckte Farbkombinationen aus Farbanteilen im Drucker-Quell-Farbraum (hier CMYK, n=4) erwartete Referenzwerte im geräteunabhängigen Ziel-Farbraum Lab (m=3). Mit einem konkreten Druck-Gerät werden die Farbkombinationen gedruckt, die Ist-Lab-Werte gemessen und die Abweichungen als Differenz bestimmt. Auf Basis der Differenzen wird eine umgekehrte Transformationstabelle vom absoluten Lab-Farbraum zurück in den Drucker-Farbraum korrigiert. Damit sind Transformationen von gegebenen geräteunabhängigen Lab-Farbwerten zur Ausgabe auf genau diesem konkreten Gerät verbessert, aber es wird nicht die ursprüngliche Transformation vom Quell- in den Ziel-Farbraum auf die Istwerte hin korrigiert.

Die US 2006/0280537 beschäftigt sich ebenfalls mit einem konkreten Druck-Gerät und beschreibt, dass nach der Feststellung eines Kalibrationsbedarfs ein nicht genauer beschriebenes Differenzprofil erzeugt wird und mit dem Standardprofil "synthetisiert" wird, und mit Hilfe des synthetisierten Profils farbkorrigierte Druckdaten erzeugt und gedruckt werden. Ziel ist auch hier die farbliche Kompensation von Änderungen und individuellen Geräteunterschieden. Auch hier wird nicht die ursprüngliche Transformation vom Quell- in den Ziel-Farbraum auf die Istwerte hin korrigiert.

Ausgehend vom vorbeschriebenen Stand der Technik liegt der Erfindung die Aufgabe zugrunde, ein Verfahren zur Durchführung von Farbraumtransformationen unter Nutzung von Transformationsvorschriften dahingehend zu verbessern, dass die Ergebnisse einer Tabellen- oder Modellberechnung (n Eingabewerte nach m Ausgabewerten, im Folgenden als Kernmodell bezeichnet) auf gegebene Sollwerte hin korrigiert werden können.

Die technische Lösung dieser Aufgabe besteht in einem Verfahren mit den Merkmalen des Patentanspruches 1. Weitere Vorteile und Merkmale ergeben sich aus den Unteransprüchen.

Die Erfindung basiert auf dem zusätzlichen Einsatz eines Korrekturverfahrens.

Die Erfindung umfasst, dass Korrekturen ebenfalls in mehrdimensionalen Tabellen gespeichert werden, die aber mit sehr wenigen Stützpunkten auskommen, im besten Fall nur 2 (für 0 und 100% der Eingabefarbe), und die nur so viele Dimensionen wie nötig enthalten, nicht unbedingt alle n Eingabefarben. Mehrere solche Korrekturen können nacheinander auf verschiedene, durchaus auch überlappende Teilräume der n Farben angewendet werden. Durch die geringe Zahl an Stützpunkten ist die interpolierte Korrektur automatisch weich und strahlt weit aus.

Die Erfindung schlägt entsprechend vor ein Verfahren zur Durchführung von Transformationen von Farbdaten von einem Quell-Farbraum mit n Farben in einen Ziel- Farbraum mit m Werten unter Nutzung einer Transformationsvorschrift TRV, gekennzeichnet durch folgende Schritte:
a) Auswählen eines Satzes von Farbdaten Q1 der n Farben des Quell-Farbraumes mit den Farbanteilen q(1), q(2), ..., q(n), für welchen ein Sollwert-Datensatz Z1 in Form von Kombinationen von Komponenten z(1), z(2), ..., z(m) des Ziel-Farbraumes vorliegt;
b) Erzeugen eines zweiten Satzes von Farbdaten Q2 der n Farben des Quell-Farbraumes mit den Farbanteilen q'(1), q'(2), ..., q'(n), die zunächst identisch zu Q1 gesetzt werden;
c) Transformieren des Satzes von Farbdaten Q2 unter Anwendung der Transformationsvorschrift TRV zur Erzeugung eines Istwert-Datensatzes Z2 der m Werte des Ziel-Farbraumes z'(1), z'(2), ..., z'(m);
d) Anwenden eines n-dimensionalen Optimierungsverfahrens, welches durch geeignetes Verändern des Satzes von Farbdaten Q2 und durch Wiederholung von Schritt c) die Differenzen zwischen Sollwert-Datensatz Z1 und Istwert-Datensatz Z2 im Sinne der kleinsten Fehlerquadrate minimiert, so dass Q2 schließlich die resultierenden optimierten Farbanteile q'(1), q'(2), ..., q'(n) enthält;
e) Berechnen der Differenzen Dq(1) = q'(1)-q(1), Dq(2) = q'(2)-q(2), ..., Dq(n) = q (n)-q(n) jedes Farbanteils der n Farben des optimierten Farbdatensatzes Q2 zu dem jeweiligen Farbanteil des Farbdatensatzes Q1;
f) Berechnen der Differenzen Dz(1) = z(1)-z'(1), Dz(2) = z(2)-z'(2), ..., Dz(m) = z(m)-z'(m) jeder Komponente des Farbdatensatzes Z1 zu der jeweiligen Komponente des Farbdatensatzes Z2;
g) Anwenden der Differenzen Dq(1), Dq(2), ..., Dq(n) und Dz(1), Dz(2), ..., Dz(m) bei Transformationen von Sätzen von Farbdaten vom Quell-Farbraum mit n Farben in die m Werte des Ziel-Farbraumes, indem bei der Transformation eines Datensatzes den Farbdaten q(i) der n Farben des Quell-Farbraumes für die i=1 bis n Werte die Differenz Dq(i) hinzugefügt wird, die so modifizierten Farbdaten q'(i) mithilfe der Transformationsvorschrift TRV in die m Komponenten z'(j) für die j = 1 bis m Werte des Ziel-Farbraumes transformiert werden und anschließend der jeweiligen Komponente z'(i) die entsprechende Differenz Dz(j) hinzugefügt wird.

Für eine Korrektur ist zunächst ein geeignetes, robustes Verfahren zu wählen, wie die Ausgabewerte angepasst werden sollen. Einfache Möglichkeiten sind z. B. zu addierende Differenzen oder zu multiplizierende Faktoren, oder andere mathematische Funktionen von Wert und Korrekturwert. Diese Wahl bestimmt die Art und Anwendung der Tabelleneinträge. Differenzen eignen sich, wenn die Korrektur im Ziel-Farbraum eher unabhängig von der Größe der Ausgabewerte ist, und haben den Vorteil, dass die korrigierten Werte begrenzter sind. Faktoren eignen sich, wenn die Natur der Korrektur eher relativer Art, also werteabhängig ist, z. B. für Reflexionsspektren, bei denen sich Modellfehler oft gut als Abweichung in der Transmission auffassen lassen, die ja ein multiplikativer Vorgang ist. Wo keine Korrekturen erforderlich sind, werden die wirkungslosen Einträge verwendet (z. B. 0 für Addition, 1 für Multiplikation). Faktoren lassen sich leicht auf Differenzen zurückführen, indem man die Korrekturen im logarithmischen Raum vornimmt.

Die Erfindung geht davon aus, dass für einen Satz von Farbdaten (Q1 genannt) aus den n Farben des Quell-Farbraumes ein gesicherter, also überprüfter Sollwert-Datensatz der m Werte des Ziel-Farbraumes vorliegt. Dieser Datensatz stellt eine Art Referenz dar. Er wird mit Z1 bezeichnet. Der überprüfte Datensatz wird beispielsweise aus dem eindeutigen Verarbeitungsergebnis durch Ausdrucken der n Farbanteile und spektraler Messung des Ergebnisses erhalten. Oder er kann beispielsweise aus punktuellen, aufwändigen Modellberechnungen für die n Farbanteile gewonnen werden. Wenn der Ziel-Farbraum geräteunabhängige Lab-Werte oder Spektren darstellt, kann man dazu spektrale Überdruckmodelle benutzen. Wenn der Ziel-Farbraum m Gerätefarben darstellt, kann man dazu Farbseparationsalgorithmen benutzen, die unter Berücksichtigung von drucktechnischen Regeln einen geeigneten Soll-Farbaufbau mit m Gerätefarbanteilen im Ziel-Farbraum berechnen.

Ein zweiter Satz von Farbdaten Q2 wird als Kopie des Satzes von Farbdaten Q1 erzeugt, damit er anschließend unabhängig verändert werden kann. Q2 wird unter Anwendung der vorgesehenen Transformationsvorschrift, zum Beispiel unter Nutzung von Transformationstabellen, transformiert. Dadurch wird ein weiterer Datensatz der m Werte des Ziel-Farbraumes erzeugt. Er wird mit Z2 bezeichnet und stellt die Istwerte der Transformation dar.

Es werden die Differenzen zwischen den beiden Datensätzen Z2 (dem Transformationsergebnis der Q2) und Z1 (dem Sollwert-Datensatz) ermittelt.

Diese Differenzen können nun auf die Transformationen von Farbdaten von einem Quell-Farbraum mit n Farben in einen Ziel-Farbraum mit m Werten unter Nutzung der Transformationsvorschrift TRV angewandt werden. Sie werden beispielsweise in einer Korrekturtabelle erfasst.

Erfindungsgemäß werden die Daten im Satz von Farbdaten Q2 der n Farben des Quell-Farbraumes verändert und unter Anwendung der vorgesehenen Transformationsvorschrift transformiert. Dadurch wird ein neuer Z2 erzeugt. Diese Veränderung von Q2 und Transformation in Z2 wird durchgeführt, bis die Differenzen Dz zwischen den beiden Datensätzen Z1 und Z2 im Sinne der kleinsten Fehlerquadrate minimiert sind. Für diese Optimierungsaufgabe eignen sich die in der numerischen Mathematik wohlbekannten Verfahren für n-dimensionale nichtlineare Optimierung, beispielsweise der Levenberg-Marquardt-Algorithmus.

Damit entsteht schließlich ein optimierter Satz von Farbdaten Q2 aus den n Farben des Quell-Farbraumes, und es kann nun die Differenz Dq der modifizierten Daten Q2, welche minimierte Differenzen erzeugt haben, zu den unveränderten Daten Q1 ermittelt werden.

Diese Differenzen Dq und Dz können nun auf die Transformationen von Farbdaten von einem Quell-Farbraum mit n Farben in einen Ziel-Farbraum mit m Werten unter Nutzung einer Transformationsvorschrift TRV angewandt werden.

Wenn mehrere Korrekturschritten nacheinander durchgeführt werden, die überlappende Unterräume betreffen, ist das Ergebnis im Allgemeinen abhängig von der Reihenfolge. Damit hängen auch die Korrekturwerte späterer Schritte von den zuvor durchgeführten Korrekturen ab. Es ist daher erfindungsgemäß vorteilhaft, die Korrekturtabellen aus den Sollwerten, dem Kernmodell TRV und der Reihenfolge wie folgt zu erzeugen:
Gegeben werden die vorliegenden Soll-Ausgabewerte in Form von einer oder mehreren grobstufigen mehrdimensionalen Tabellen, die sinnvollerweise größere Unterräume (mit u Farben) als die abgespeicherten feinstufigen (z. B. k-dimensionalen) Tabellen- oder Modellberechnungen abdecken bis hin zu den vollen n Farben, falls gewünscht. In der Reihenfolge dieser Tabellen wird eine Korrektur-Kette aufgebaut, die am Anfang leer ist.

Mit der ersten Sollwerte-Tabelle wird für alle Einträge (als Eingabe-Datensätze) das Kernmodell aufgerufen, das Ergebnis mit dem jeweiligen Sollwert in allen m Komponenten verglichen, die Eingabewerte, wenn gewünscht, optimiert, der erforderliche Korrekturwert der Eingabe aufgrund der Optimierung und der Ausgabe aufgrund der verbleibenden Differenz zum Sollwert berechnet und die beiden Korrekturen in zwei neue Korrekturtabellen eingetragen. Diese Tabellen werden als zusätzliche Korrekturtransformationen eingangs- und ausgangsseitig um das Kernmodell gelegt.

Dann wird die nächste Sollwerte-Tabelle genauso verarbeitet. Das dabei entstehende zweite Paar von Korrekturtabellen berücksichtigt dadurch die Wirkung der ersten Tabelle, und bei überlappenden Einträgen findet keine falsche Mehrfachkorrektur statt. Natürlich sollen überlappende, redundante Sollwert-Einträge die gleichen Ausgabewerte enthalten, also soll der Satz von Sollwert-Tabellen in sich konsistent sein.

Am Ende steht ein Verfahren zur Verfügung, das durch Aufruf des Kernmodells und einer Kette von vorgeschalteten und nachfolgenden Korrekturen weiche Anpassungen anhand von vergleichsweise wenigen gitterbasierten Kontrollpunkten an deren Sollwerte durchführt.

Es handelt sich gewissermaßen um eine Sammlung von konzentrischen Schalen um das Kernmodell, jede Schale bestehend aus einer eingangsseitigen und einer ausgangsseitigen Anpassung, die beide auf dem gleichen Gitter von Eingabewerten definiert sind. Mit anderen Worten haben die Tabellenpaare die gleiche Folge von Tabelleneinträgen, es gibt pro Eintrag sowohl n Korrekturwerte für die Eingabe als auch m Korrekturwerte für die Ausgabe, und es werden bei einer Transformation von Eingabewerten erst die Eingabekorrekturen angewendet, dann die nächstinnere Schale (bzw. ganz innen das Kernmodell) aufgerufen, und nach der Rückkehr die Ausgabekorrekturen angewendet.

Je nach Anwendungsfall ist es sinnvoll, dass im Schritt g) nur eine oder beide der Differenzen Dz(i), Dq(i) angewendet werden. Im Allgemeinen führt die Verwendung beider Differenztabellen dazu, dass erstens die Eingabe-Datensätze exakt auf die Sollwerte transformiert werden, aber darüber hinaus nicht nur eine einfache Interpolation der Abweichungen stattfindet, sondern bereits auf Eingabeseite systematische Abweichungen ausgeglichen werden, was einen erheblichen Vorteil gegenüber dem Stand der Technik bereitstellt, indem die Korrekturmöglichkeiten erweitert und die Korrekturen verbessert werden.

In vorteilhafter Weise wird zur Reduzierung der Arbeitsschritte vorgeschlagen, dass in Schritt d) nur diejenigen Farbanteile der n Farben verändert werden, die nicht Null sind.

Das erfindungsgemäße Verfahren wird gemäß einem Vorschlag der Erfindung ausgeführt auf einer Rechnereinheit mittels einer Steuerungssoftware, wobei die Rechnereinheit eine Eingabeeinheit zur Bereitstellung der digitalen Farbdaten des Projekts und eine Ausgabeeinheit zur Ausgabe der transformierten Farbdaten sowie einen Speicher umfasst, auf welchem die Transformationstabellen gespeichert sind, wobei mittels der Steuerungssoftware für Eingabe-Farbdaten des Projekts unter Nutzung der Transformationstabellen Farbdaten für den Ziel-Farbraum erzeugt und in einem Datensatz bereitgestellt werden

Es folgt nun eine formalere, allgemeine Beschreibung des Verfahrens:
Der n-dimensionale Raum der Eingabe-Vektoren sei Rn, der Raum der m-komponentigen Ausgabe-Vektoren sei Rm. Sollwerte T aus Rm seien bekannt für Punkte P aus einem Unterraum Ru des Eingaberaums Rn mit u ≤ n Dimensionen. Um das Kernmodell M (Rn -> Rm) wird eine Korrekturschale gelegt. Eine Korrekturschale besteht im Allgemeinen aus einer Anpassung A der Eingabewerte (Ru -> Ru) vor dem Modell und einer daran gekoppelten Anpassung B der Ausgabewerte (Ru -> Rm) nach dem Modell. Das korrigierte Modell (A -> M -> B) ist weiterhin eine Abbildung n -> m. Weitere Schalen können um das korrigierte Modell gelegt werden. A oder B können entfallen. Formal können sie dann als identische Abbildung angesehen werden. In der Umsetzung würde der jeweilige Schritt dann übersprungen. A und B werden bestimmt, indem alle bekannten Punkte P wie folgt verarbeitet werden:
Zu dem Eingabe-Punkt P aus Ru gehört sein Sollwert T aus Rm. Das Modell liefert für diesen Eingabe-Vektor (ergänzt um Null-Einträge in den fehlenden n-u Dimensionen) einen Modell-Ausgabewert V.

Wenn die Abbildung A genutzt wird, dient sie als Vorbereitung der Eingabewerte. Dann wird für jeden Punkt P ein modifizierter Eingabewert P' gesucht, dessen Modell-Ausgabewert V' näher an T ist. Ein oft genutztes Verfahren ist das Levenberg-Marquardt-Verfahren, eine mehrdimensionale nichtlineare Optimierung der Eingabe-Parameter P, bei der nach Bedarf Nebenbedingungen wie z. B. der gültige Definitionsbereich verwendet werden. Die Abbildung A besteht also aus Paaren (P, P'). Dieser Schritt geschieht vor der Bestimmung von B.

Wenn die Abbildung B genutzt wird, wird für jeden Punkt P das (ggf. durch A vorkorrigierte) Modell abgefragt. Das heißt, falls Abbildung A genutzt wird, wird mit ihr P -> P' abgebildet und P' in das Modell gegeben. Falls Abbildung A nicht genutzt wird, wird P direkt in das Modell gegeben. Das Modell liefert einen Modell-Ausgabewert V mit m Komponenten. Die Abweichung zum Sollwert T kann z. B. als komponentenweise Differenz D=T-V oder als komponentenweiser Faktor F=T/V gesehen werden, so dass das Modell durch V+D=T oder durch V*F=T exakt auf den Sollwert T korrigiert würde. Die Abbildung B besteht dann aus Paaren (P, D) oder (P, F) und liefert den Korrekturwert, der auf V angewendet wird.

Damit diese punktweisen Korrekturen auch weich die Nachbarschaft der bekannten Punkte beeinflussen können, müssen die Abbildungen A und B interpolierbar sein. Hier sind z. B. topologische Verfahren wie "Natural Neighbor Interpolation" möglich oder "Thin Plate Splines", die mit beliebigen Punkten konfiguriert werden können. Aber am effizientesten und am leichtesten kontrollierbar sind regelmäßige rechtwinklige u-dimensionale Gittertabellen, wie sie in Farbtransformationen z. B. in ICC-Profilen etabliert sind, oder kombinierte Sammlungen davon.

Im Folgenden werden Anwendungsbeispiele beschrieben und illustriert:
Beispiel 1: Ziel sei die Farbtransformation von 7 Druckfarbwerten in spektrale Reflexionswerte.

Dafür gebe es ein aufwändiges (z. B. physikalisches) Vorhersagemodell, das Reflexionswerte für beliebige Überdruckkombinationen berechnen kann. Es ist aber zu langsam für die Anwendung auf Millionen Bildpunkte in Druckdateien, und es ist auch zu aufwändig, eine detaillierte 7-dimensionale Tabelle mit Vorhersagen zu befüllen, denn eine solche Tabelle wäre riesig.

Daher wird mit diesem Vorhersagemodell nur eine Sammlung von detaillierten Tabellen für alle 4-dimensionalen Unterräume befüllt, weil das die normalerweise vorkommenden, wichtigen Farbkombinationen im Druck abdeckt. Zusätzlich gibt es eine Komponente, die aus den bekannten 4-dimensionalen Tabellen Anfragen mit 5 bis 7 Farben schnell (aber grob) schätzen kann. Die Sammlung plus die Schätzkomponente ergeben das Modell M.

Da diese Schätzung eine Art Extrapolation (in untabellierte Zusatzdimensionen) ist, ist es vorteilhaft, sie punktuell zu kontrollieren. Man kann jetzt als Abbildung B eine Sammlung von grob abgestuften 5-dimensionalen Unterraumtabellen hinzufügen. Auch hier gebe es eine Schätzkomponente für Anfragen mit 6 oder 7 Farben. Für jeden Eintrag P entsteht die Korrektur D oder F aus dem Schätzergebnis V aus M relativ zum Sollwert T aus dem Vorhersagemodell. Damit werden 5-dimensionale Anfragen bereits verbessert. (Für 4-dimensionale Einträge kann man direkt die Korrektur D=0 bzw. F=1 setzen).

Als weitere Korrekturschale kann eine weitere Abbildung B2 mit einer 7-dimensionalen Tabelle ergänzt werden, die nur noch die Ecken (0 oder 100%) enthält, also nur 2⁷ Einträge. Diese wenigen lassen sich noch gut mit dem Vorhersagemodell berechnen. Damit wird die freie Extrapolation komplett eingefangen und liefert für alle Anfragen sinnvolle, kontrollierte Ergebnisse.

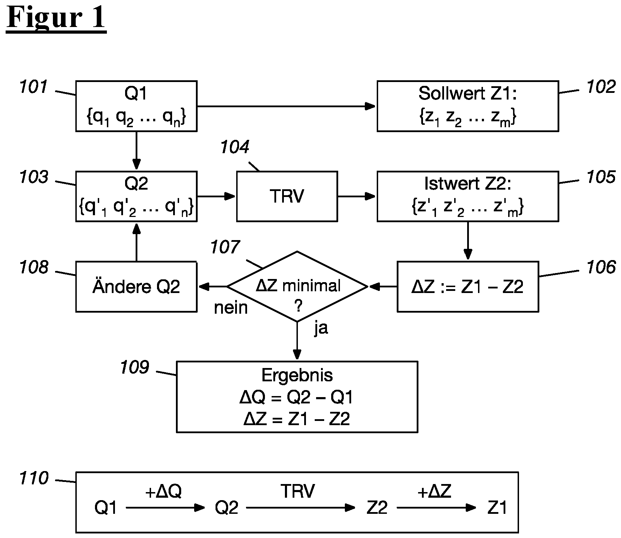

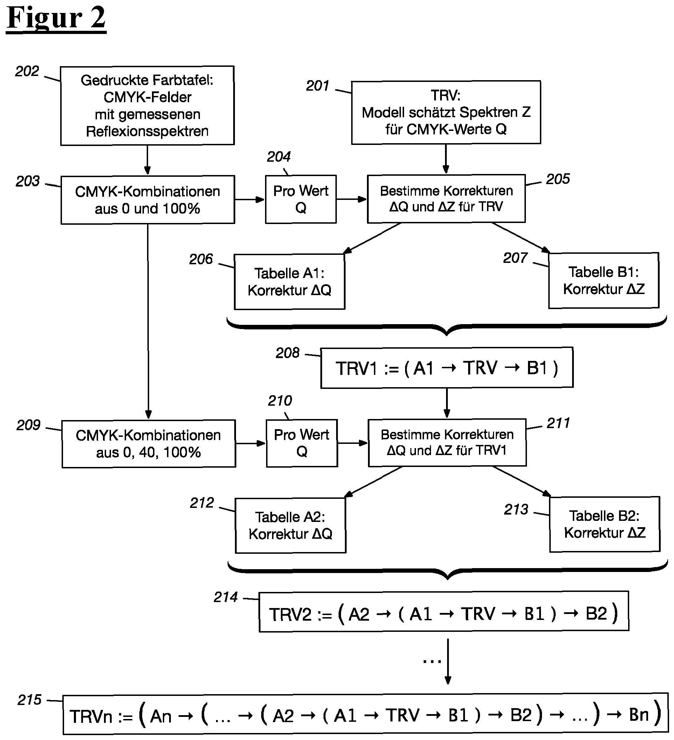

Beispiel 2 (Figur 1 und 2): Ziel ist die Anpassung eines physikalischen Vorhersagemodells an Messwerte aus einem Testchart.

Ein physikalisches Vorhersagemodell beschreibt das optische Verhalten von übereinander gedruckten oder gemischten Farben. Das Drucksubstrat dient als Basis. Die Eigenschaften der einzelnen Farben werden z. B. durch effektive Rasterpunkt-Flächenanteile, Schichtdicken und Transmissions- und Streuspektren charakterisiert, wobei dafür Farbfelder benutzt werden, die nur aus Abstufungen einzelner Druckfarben bestehen. Die Farbübertragung von Farbe auf Papier sowie von Farbe auf bereits gedruckte Farbe ist prozessabhängig. Dieses sog. Farbannahmeverhalten wird meist an Farbfeldern bestimmt, die aus einem Paar von vollflächig aufgetragenen Farben bestehen. Damit ist das Druckbild im Wesentlichen physikalisch erfasst. Man kann nun das Reflexionsspektrum für beliebige Farbkombinationen berechnen.

Diese Modellvorstellung ist aber nur ein vereinfachtes Abbild der Realität. Man möchte daher mit weiteren Farbfeldern das Modell weich an die tatsächlichen Messwerte anpassen. Dafür gibt es etablierte Testtafeln wie die ECI2002-Testtafel für CMYK-Druckverfahren. In dieser Testtafel liegen u. a. alle CMYK-Kombinationen aus 0, 40, oder 100% Tonwerten vor. Mit diesen 3⁴ = 81 Feldern kann eine Abbildung A und eine Abbildung B angepasst werden.

Die Abbildung A entspricht einer Wechselwirkung im gerasterten Halbton, die vom Modell nicht ausreichend beschrieben ist. Es könnte z. B. ein Überdruck aus 40% Cyan gefolgt von 40% Magenta im Modell stärker rötlich sein als in Wirklichkeit, weil in Wirklichkeit die Magenta-Rasterpunkte schlechter auf den Cyan-Rasterpunkten haften, als es der vollflächigen Farbübertragung entspricht. Dann würde der Eingabe-Punkt (40,40,0,0) etwa auf einen modifizierten Punkt (40,36,0,0) abgebildet. Die physikalische Interpretation könnte sein, dass Magenta im Raster um 10% schwächer auf Cyan übertragen wird.

Die Abbildung B übernimmt nach dieser Vorabanpassung den Restfehler des Modells, so dass insgesamt das Modell die Messwerte auf dem (0,40,100)⁴ Gitter exakt reproduziert.

Damit wird das Modell an wesentlichen Punkten zurechtgebogen. Die ECI2002-Testtafel enthält auch noch feinere CMYK-Kombinationen, die allerdings in Schwarz-Richtung nicht vollständig sind, so dass einzelne Sollwerte fehlen. Man kann als nächstes die Kombinationen aus CMY (0,20,40,70,100) mit K (0,20,40,80,100) benutzen und eine weitere Korrekturschale um das Modell legen. Die zuvor korrigierten (0,40,100)-Kombinationen werden dann eine Nullkorrektur in der äußeren Schale bekommen. Die neuen Stufen werden nur eine relativ kleine Korrektur brauchen, weil die innere (0,40,100)-Schale auch in den Zwischentönen durch Interpolation der Korrekturen weitgehend zurecht gebogen hat. Die nicht vorhandenen Sollwerte lassen "Löcher" in der Korrekturtabelle A und B, die durch Interpolation gesetzter Nachbarn weich gefüllt werden. Weiterhin kann man eine dritte Schale aus der feinsten Abstufung CMY (0,10,20,30,40,55,70,85,100) und K (0,10,20,40,60,80,100) befüllen und hat damit über 90% der Farbfelder der ECI2002-Testtafel exakt reproduziert.

Schließlich wird ein konkreter Anwendungsfall beschrieben am Beispiel der Verwendung von Unterraum-Tabellen, die für Eingabe-Daten mit bis zu k (4) Farbanteilen korrekte Zielwerte gespeichert haben, und für die ein Schätzverfahren für Eingabe-Daten mit mehr als k Farbanteilen (bis zu n) geschätzte Zielwerte liefert.

Gegeben ist eine Transformation, die korrigiert werden soll, repräsentiert durch Unterraum-Tabellen. Die Transformation liefert für Eingabe-Farbdaten aus n Farbanteilen ein "Resultat" aus m Werten. Das kann für beliebige Eingaben (Kombinationen von Anteilen zwischen 0 und 100% der n Farben) durch Interpolation erreicht werden.

Zu einem Satz von Eingaben existieren die korrekten Ergebnisse. Das sind korrekte, abgesicherte Resultate, die mit den von der Transformation erzeugten übereinstimmen sollten. Die Resultate sind zum Beispiel durch Drucken und Messen der Eingabe-Farbdaten oder Transformation durch ein anderes Modell mit guten Ergebnissen entstanden.

Es folgt beispielhaft eine konkrete Rechnung für Unterraum-Tabellen mit k=1, nur einer Farbe, für insgesamt n=2 Farben. Der Ziel-Farbraum ist Lab, d.h. die m=3 Werte Helligkeit, rötlich-Wert, gelblich-Wert.

**Unterraum-Tabelle 1: für Druckfarbe Gelb**

| | | | | |
|---|---|---|---|---|
| 0% Gelb | 95 | 0 | 0 | (sehr hell, nicht rötlich, nicht gelblich, unbedrucktes Papier) |
| 100% Gelb | 90 | 0 | 100 | (hell, nicht rötlich, sehr gelblich) |

**Unterraum-Tabelle 2: für Druckfarbe Magenta**

| | | | | |
|---|---|---|---|---|
| 0% Magenta | 95 | 0 | 0 | (sehr hell, nicht rötlich, nicht gelblich, unbedrucktes Papier) |
| 100% Magenta | 55 | 70 | 0 | (mittlere Helligkeit, sehr rötlich, nicht gelblich) |

Bekannt ist außerdem der korrekte Sollwert für die Eingabe 100% Gelb + 100% Magenta:

| | | | | |
|---|---|---|---|---|
| 100% Gelb + 100% Magenta | 54 | 65 | 62 | (durch Modell oder Druck+Messung) |

Die Transformation liefert

| | | | |
|---|---|---|---|
| 100% Gelb + 100% Magenta | 52 | 67 | 64 |

Die Differenz zum Sollwert ist

| | | | | |
|---|---|---|---|---|
| 100% Gelb + 100% Magenta | +2 | -2 | -2 | (mache heller, weniger rötlich+gelblich) |

Ein Optimierungsverfahren würde nun die Farbanteile von Gelb und Magenta reduzieren. Das Ergebnis könnte beispielhaft sein

| | | | |
|---|---|---|---|
| 98% Gelb + 96% Magenta | 53 | 64 | 62 |

Die Differenz zum Sollwert ist minimiert, aber nicht Null. Noch weniger Magenta würde zwar heller machen, aber die Rötlichkeit weiter senken, und sie ist schon zu niedrig.

| | | | | |
|---|---|---|---|---|
| 98% Gelb + 96% Magenta | -1 | -1 | 0 | (noch zu dunkel, nicht mehr rot genug) |

Die Differenz für optimierten Eingabewerte wird dem originalen Eingabewert zugeordnet,

| | | |
|---|---|---|
| 100% Gelb + 100% Magenta | -2% Gelb | -4% Magenta |

Durch Anwendung dieser Differenz auf das Resultat kann die Transformation für diese Eingabe korrigiert werden.

Eine andere Eingabe, z. B. 50% Gelb + 50% Magenta, liegt entfernt von dem bekannten Eingabewert. Zielführend ist vermutlich eine kleinere Korrektur. Sie könnte z.B. mit der Distanz abklingen.

Die beiden Tabellen aus dem Satz der Eingaben und ihren Eingabe-Differenzen und Zielwert-Differenzen könnten dann so sein:

| Gelb | Magenta | ΔGelb | ΔMagenta | ΔL | Δa | Δb |
|---|---|---|---|---|---|---|
| 0% | 0% | 0 | 0 | 0 | 0 | 0 |
| 100% | 0% | 0 | 0 | 0 | 0 | 0 |
| 0% | 100% | 0 | 0 | 0 | 0 | 0 |
| 100% | 100% | -2 | -4 | -1 | -1 | 0 |

Darin kann man interpolieren:

| | | | | | | | |
|---|---|---|---|---|---|---|---|
| 50% | 50% | -1/2 | -1 | +1/4 | -1/4 | 0 | (Beitrag ist hier je 1/4) |

Das ist die Korrektur, die auf die Eingabe sowie auf das Resultat der Transformation (Schätzverfahren) anzuwenden ist. Das Resultat würde zunächst wie folgt berechnet:
Die Eingabewerte für Gelb und Magenta werden von 50% + 50% auf 49.5% + 49% korrigiert.

**In Unterraum-Tabelle 1: für Druckfarbe Gelb interpoliert**

| | | | | |
|---|---|---|---|---|
| 49.5% Gelb | 92.5 | 0 | 50 | (sehr hell, nicht rötlich, mäßig gelblich) |

**In Unterraum-Tabelle 2: für Druckfarbe Magenta interpoliert:**

| | | | | |
|---|---|---|---|---|
| 49% Magenta | 75 | 35 | 0 | (eher hell, mäßig rötlich, nicht gelblich) |

Das Schätzverfahren liefert durch Kombination (aus XYZ-Farbraum)

| | | | |
|---|---|---|---|
| 49.5% Gelb + 49% Magenta | 73 | 34 | 41 |

Endergebnis nach Korrektur der Zielwerte:

| | | | | |
|---|---|---|---|---|
| 50% Gelb + 50% Magenta | 73.25 | 33.75 | 41 | (interpolierte Δ wurden addiert) |

Die Erfindung beschreibt eine für den Fachmann praktikable und umsetzbare Lösung, mit welcher selbst bei sehr hoher Auflösung eines Layouts und einer großen Anzahl von Eingabefarben eine ausreichend schnelle und qualitativ hochwertige Farbraumtransformation in den Farbraum des konkreten Druck-Systems möglich ist.

Weitere Vorteile und Merkmale ergeben sich aus der folgenden Beschreibung anhand der Figuren. Dabei zeigen:
- Figur 1: die quell- und zielseitige Korrektur einer Transformation anhand von Sollwerten.
- Figur 2: die Schachtelung von Korrekturen bis zur gewünschten Genauigkeit.

Figur 1 zeigt die Schritte des Korrekturverfahrens mit iterativer Anpassung der Quelldaten und anschließender Residual-Korrektur der Zieldaten für einen ausgewählten Farbdatensatz Q1 der n Farben des Quell-Farbraumes (101) mit den Farbanteilen der Farben q(1), q(2), ..., q(n), für welchen ein überprüfter, gesicherter Sollwert-Datensatz Z1 der m Werte des Ziel-Farbraumes (102) mit den Komponenten z(1), z(2), ..., z(m) etwa durch Messung vorliegt. In Schritt 103 wird der aktuelle Quell-Farbdatensatz Q2 mit dem Startwert (101) initialisiert. Dieser wird unter Anwendung der vorgesehenen Transformationsvorschrift, beispielsweise einem Modell, im Schritt 104 transformiert. Es wird der Datensatz Z2 der m Werte des Ziel-Farbraumes 105 mit den Komponenten z'(1), z'(2), ..., z'(m) erzeugt.

Im Schritt 106 erfolgt die Berechnung der Differenzen der einzelnen Werte jeweils aus Z1 und Z2. Diese Differenzen werden in 107 geprüft, ob sie ausreichend klein sind. Wenn nicht, erfolgt in Schritt 108 die Modifikation des Farbdatensatzes Q1 aus Schritt 103 zur Erzeugung des Farbdatensatzes Q2. Der modifizierte Farbdatensatz wird in Schritt 104 transformiert und die Schritte 105 bis 107 werden wiederholt. Die Schritte sind schematisch gemeint, die konkreten Abläufe sind Teil des eingesetzten Optimierungsverfahrens, insbesondere wie die Modifikation in Schritt 108 bestimmt wird. Sind die Differenzen schließlich minimal, werden in Schritt 109 die Differenzen der Quell-Farbdatensätze Q2-Q1 berechnet. Sie werden beispielsweise für eine Vielzahl von Paaren aus Q1 und Z1 und ihren Differenzen Z1-Z2 sowie Q2-Q1 in Transformationstabellen verwaltet und sind interpolierbar. Die Quell-Differenzen werden bei der Gesamt-Transformation 110 angewendet auf die Eingabedaten, danach folgt die ursprüngliche Transformation 104 in den Ziel-Farbraum und die abschließende Korrektur des Restfehlers 106.

Figur 2 bezieht sich auf das Beispiel 2 in der Beschreibung ab Seite 15. Sie beschreibt die mehrfache hierarchisch unterteilte Korrektur eines Modells TRV 201 mit Hilfe von Messdaten einer gedruckten CMYK-Testtafel 202. Für die erste Korrektur an den Ecken des CMYK-Farbraums werden in Schritt 203 die 2^4 = 16 Kombinationen aus 0 und 100% und deren Messdaten genommen. Pro Kombination (204) werden die quell- und zielseitigen Korrekturen wie in Figur 1 bestimmt (205) und tabelliert, so dass insgesamt die Tabellen A1 (206) und B1 (207) mit je 16 Einträgen entstehen. Diese werden mit der Modell-Transformationsvorschrift TRV zu einer neuen, Ecken-korrigierten Transformation TRV1 zusammengefasst (208).

Die zweite Korrektur nutzt die in vielen Testtafeln vorhandenen CMYK-Kombinationen aus 0, 40 und 100% (209) und deren Messwerte. Für jeder der 3^4 = 81 Kombinationen (210) werden die Korrekturen für TRV1 bestimmt (211) und in den Tabellen A2 (212) und B2 (213) abgelegt. Da die Ecken schon in TRV1 richtig korrigiert waren, sind diese 16 der 81 Korrektureinträge Null. A2 und B2 werden als nächste Korrekturschale um TRV1 gelegt, so dass nun zwei Schalen um TRV liegen (214).

Das so korrigierte Modell TRV2 (214) ist an allen Ecken und in den Mitteltönen exakt und bedarf nur noch kleiner Anpassungen. Weitere Schalen benutzen im Fall der ECI2002- oder IT8.7/4-Testtafeln die Kombinationen 0, 20, 40, 70, 100 für CMY und 0, 20, 40, 60, 100 für K und anschließend 0, 10, 20, 30, 40, 55, 70, 85, 100 für CMY und 0, 10, 20, 40, 60, 80, 100 für K. Damit wird die Gitterstruktur dieser Standard-Testcharts optimal genutzt. Mit einem so korrigierten Modell können CMYK-Druckdaten eines Projektes spektral simuliert werden und anschließend mit Standardverfahren auf dem Bildschirm oder auf Inkjet-Prüfdrucksystemen dargestellt werden.

## Patentansprüche

1. Verfahren zur rechnergestützten Durchführung von Transformationen von Farbdaten von einem Quell-Farbraum in einen Ziel-Farbraum unter Nutzung einer gegebenen Transformationsvorschrift TRV,
wobei der Quellfarbraum n Farben umfasst, die in jedem zu druckenden Punkt in Kombinationen von Farbanteilen q(1) bis q(n) vorliegen,
der Zielfarbraum m Werte umfasst, die zu Kombinationen von Komponenten z(1) bis z(m) kombinierbar sind,
und es zumindest einige Kombinationen der Farbanteile q(1), q(2), ..., q(n) des Quellfarbraumes gibt, für die Kombinationen von Komponenten z(1), z(2), ..., z(m) des Ziel-Farbraumes zugeordnet sind,
**gekennzeichnet durch** folgende Schritte:
a) Auswählen eines Satzes von Farbdaten Q1 der n Farben des Quell-Farbraumes mit den Farbanteilen q(1), q(2), ..., q(n), für welchen ein Sollwert-Datensatz Z1 in Form von Kombinationen von Komponenten z(1), z(2), ..., z(m) des Ziel-Farbraumes vorliegt;
b) Erzeugen eines zweiten Satzes von Farbdaten Q2 der n Farben des Quell-Farbraumes mit den Farbanteilen q'(1), q'(2), ..., q'(n), die zunächst identisch zu Q1 gesetzt werden;
c) Transformieren des Satzes von Farbdaten Q2 unter Anwendung der Transformationsvorschrift TRV zur Erzeugung eines Istwert-Datensatzes Z2 der m Werte des Ziel-Farbraumes z'(1), z'(2), ..., z'(m);
d) Anwenden eines n-dimensionalen Optimierungsverfahrens, welches durch geeignetes Verändern des Satzes von Farbdaten Q2 und durch Wiederholung von Schritt c) die Differenzen zwischen Sollwert-Datensatz Z1 und Istwert-Datensatz Z2 im Sinne der kleinsten Fehlerquadrate minimiert, so dass Q2 schließlich die resultierenden optimierten Farbanteile q'(1), q'(2), ..., q'(n) enthält;
e) Berechnen der Differenzen Dq(1) = q'(1)-q(1), Dq(2) = q'(2)-q(2), ..., Dq(n) = q (n)-q(n) jedes Farbanteils der n Farben des optimierten Farbdatensatzes Q2 zu dem jeweiligen Farbanteil des Farbdatensatzes Q1;
f) Berechnen der Differenzen Dz(1) = z(1)-z'(1), Dz(2) = z(2)-z'(2), ..., Dz(m) = z(m)-z'(m) jeder Komponente des Farbdatensatzes Z1 zu der jeweiligen Komponente des Farbdatensatzes Z2;
g) Anwenden der Differenzen Dq(1), Dq(2), ..., Dq(n) und Dz(1), Dz(2), ..., Dz(m) bei Transformationen von Sätzen von Farbdaten vom Quell-Farbraum mit n Farben in die m Werte des Ziel-Farbraumes, indem bei der Transformation eines Datensatzes den Farbdaten q(i) der n Farben des Quell-Farbraumes für die i=1 bis n Werte die Differenz Dq(i) hinzugefügt wird, die so modifizierten Farbdaten q'(i) mithilfe der Transformationsvorschrift TRV in die m Komponenten z'(j) für die j = 1 bis m Werte des Ziel-Farbraumes transformiert werden und anschließend der jeweiligen Komponente z'(j) die entsprechende Differenz Dz(j) hinzugefügt wird.

2. Verfahren nach Anspruch 1, **dadurch gekennzeichnet, dass** zur Bestimmung des Sollwert-Datensatzes Z1 der Datensatz Q1 ausgedruckt und der Sollwert-Farbdatensatz Z1 durch spektrale Messung bestimmt wird.

3. Verfahren nach einem der vorhergehenden Ansprüche, **dadurch gekennzeichnet, dass** in Schritt d) nur diejenigen Farbanteile der n Farben verändert werden, die nicht Null sind.

4. Verfahren nach einem der vorhergehenden Ansprüche, **dadurch gekennzeichnet, dass** das Verfahren nach Anspruch 1 für mehrere Sätze von Farbdaten Q^{j} durchgeführt wird und dass die ermittelten Differenzen Dq(i)^{j} und Dz(i)^{j} für mehrere Sätze Q^{j} in Transformationstabellen verwaltet werden und bei Transformationen im Schritt f) die anzuwendenden Differenzen in diesen Transformationstabellen interpoliert werden.

5. Verfahren nach einem der vorhergehenden Ansprüche, **dadurch gekennzeichnet, dass** das Verfahren ausgeführt wird auf einer Rechnereinheit mittels einer Steuerungssoftware, wobei die Rechnereinheit eine Eingabeeinheit zur Bereitstellung der digitalen Farbdaten des Quell-Farbraumes des Projekts und eine Ausgabeeinheit zur Ausgabe der transformierten Werte des Ziel-Farbraumes sowie einen Speicher umfasst, auf welchem Transformationstabellen gespeichert sind, wobei mittels der Steuerungssoftware für Eingabe-Farbdaten des Projekts unter Nutzung der Transformationstabellen Werte für den Ziel-Farbraum erzeugt und in einem Datensatz bereitgestellt werden.

## Claims

1. Method for the computer-aided execution of transformations of colour data from a source colour space into a target colour space using a given transformation rule TRV,
wherein the source colour space comprises n colours which are present in each dot to be printed in combinations of colour proportions q(1) to q(n),
the target colour space comprises m values which can be combined to form combinations of components z(1) to z(m),
and there are at least some combinations of the colour components q(1), q(2), ..., q(n) of the source colour space, for which combinations of components z(1), z(2), ..., z(m) of the target colour space are assigned,
**characterised by** the following steps:
a) selecting a set of colour data Q1 of the n colours of the source colour space with the colour components q(1), q(2), ..., q(n), for which there is a set of target value data Z1 in the form of combinations of components z(1), z(2), ..., z(m) of the target colour space;
b) generating a second set of colour data Q2 of the n colours of the source colour space with the colour components q'(1), q'(2), ..., q'(n), which are initially set identically to Q1;
c) transforming the set of colour data Q2 using the transformation rule TRV to generate an actual value data set Z2 of the m values of the target colour space z'(1), z'(2), ..., z'(m);
d) applying an n-dimensional optimisation method which, by suitably modifying the set of colour data Q2 and repeating step c), minimises the differences between target value data set Z1 and actual value data set Z2 in terms of the least squares error, so that Q2 finally contains the resulting optimised colour components q'(1), q'(2), ..., q'(n);
e) calculating the differences Dq(1) = q'(1)-q(1), Dq(2) = q'(2)-q(2), ..., Dq(n) = q'(n)-q(n) of each colour component of the n colours of the optimised colour data set Q2 to the respective colour component of the colour data set Q1;
f) calculating the differences Dz(1) = z(1)-z'(1), Dz(2) = z(2)-z'(2), ..., Dz(m) = z(m)-z'(m) of each component of the colour data set Z1 to the respective component of the colour data set Z2;
g) applying the differences Dq(1), Dq(2), ..., Dq(n) and Dz(1), Dz(2), ... , Dz(m) when transforming sets of colour data from the source colour space with n colours to the m values of the target colour space by adding the difference Dq(i) to the colour data q(i) of the n colours of the source colour space for the i=1 to n values when transforming a data set, the colour data q'(i) modified in this way are transformed into the m components z'(j) for the j = 1 to m values of the target colour space using the transformation rule TRV and then the corresponding difference Dz(j) is added to the respective component z'(j).

2. Method according to claim 1, **characterised in that**, to determine the target value data set Z1, the data set Q1 is printed out and the target value colour data set Z1 is determined by spectral measurement.

3. Method according to one of the preceding claims, **characterised in that** in step d) only those colour components of the n colours are changed which are not zero.

4. Method according to one of the preceding claims, **characterised in that** the method according to claim 1 is carried out for several sets of colour data Qj and **in that** the determined differences Dq(i)j and Dz(i)j for several sets Qj are managed in transformation tables and, in the case of transformations in step f), the differences to be applied are interpolated in these transformation tables.

5. Method according to one of the preceding claims, **characterised in that** the method is carried out on a computer unit by means of control software, wherein the computer unit comprises an input unit for providing the digital colour data of the source colour space of the project and an output unit for outputting the transformed values of the target colour space as well as a memory on which transformation tables are stored, wherein values for the target colour space are generated by means of the control software for input colour data of the project using the transformation tables and are provided in a data set.

## Revendications

1. Procédé d'exécution assistée par ordinateur de transformations de données de couleurs d'un espace chromatique source en un espace chromatique cible en utilisant une règle de transformation donnée TRV,
l'espace chromatique source comprenant n couleurs qui sont présentes dans chaque point à imprimer dans des combinaisons de proportions de couleurs q(1) à q(n),
l'espace chromatique cible m comprend des valeurs qui peuvent être combinées en combinaisons de composantes z(1) à z(m),
et il existe au moins quelques combinaisons des composantes de couleur q(1), q(2), ..., q(n) de l'espace chromatique source, pour lesquelles des combinaisons de composantes z(1), z(2), ..., z(m) de l'espace chromatique cible sont associées,
**caractérisé par** les étapes suivantes :
a) sélection d'un ensemble de données chromatiques Q1 des n couleurs de l'espace chromatique source avec les composantes chromatiques q(1), q(2), ..., q(n), pour lequel il existe un ensemble de données de consigne Z1 sous forme de combinaisons de composantes z(1), z(2), ..., z(m) de l'espace chromatique cible;
b) créer un deuxième ensemble de données colorimétriques Q2 des n couleurs de l'espace colorimétrique source avec les composantes colorimétriques q'(1), q'(2), ..., q'(n), qui sont initialement définies comme étant identiques à Q1 ;
c) transformer l'ensemble des données de couleur Q2 en appliquant la règle de transformation TRV pour produire un ensemble de données de valeur réelle Z2 des m valeurs de l'espace couleur cible z'(1), z'(2), ..., z'(m) ;
d) appliquer un procédé d'optimisation à n dimensions qui, en modifiant de manière appropriée l'ensemble de données de couleur Q2 et en répétant l'étape c), minimise les différences entre l'ensemble de données de valeur cible Z1 et l'ensemble de données de valeur réelle Z2 dans le sens des moindres carrés d'erreur, de sorte que Q2 contienne finalement les parties de couleur optimisées q'(1), q'(2), ..., q'(n) résultantes ;
e) calculer les différences Dq(1) = q'(1)-q(1), Dq(2) = q'(2)-q(2), ..., Dq(n) = q'(n)-q(n) de chaque partie de couleur des n couleurs de l'ensemble de données de couleur optimisé Q2 par rapport à la partie de couleur respective de l'ensemble de données de couleur Q1 ;
f) calculer les différences Dz(1) = z(1)-z'(1), Dz(2) = z(2)-z'(2), ..., Dz(m) = z(m)-z'(m) de chaque composante de l'ensemble de données de couleur Z1 à la composante respective de l'ensemble de données de couleur Z2 ;
g) appliquer les différences Dq(1), Dq(2), ..., Dq(n) et Dz(1), Dz(2), ... , Dz(m) lors de transformations d'ensembles de données colorimétriques de l'espace chromatique source de n couleurs vers les m valeurs de l'espace chromatique cible, en ajoutant la différence Dq(i) aux données colorimétriques q(i) des n couleurs de l'espace chromatique source pour les valeurs i=1 à n lors de la transformation d'un ensemble de données, les données de couleur q'(i) ainsi modifiées sont transformées à l'aide de la règle de transformation TRV en les m composantes z'(j) pour les j = 1 à m valeurs de l'espace chromatique cible et la différence correspondante Dz(i) est ensuite ajoutée à la composante respective z'(j).

2. Procédé selon la revendication 1, **caractérisé en ce que**, pour déterminer l'ensemble de données de valeur cible Z1, l'ensemble de données Q1 est imprimé et l'ensemble de données de couleur de valeur cible Z1 est déterminé par mesure spectrale.

3. Procédé selon l'une des revendications précédentes, **caractérisé en ce que**, à l'étape d), seules les composantes chromatiques des n couleurs qui ne sont pas nulles sont modifiées.

4. Procédé selon l'une des revendications précédentes, **caractérisé en ce que** le procédé selon la revendication 1 est mis en oeuvre pour plusieurs ensembles de données de couleur Qj et **en ce que** les différences déterminées Dq(i)j et Dz(i)j pour plusieurs ensembles Qj sont gérées dans des tables de transformation et, lors de transformations à l'étape f), les différences à appliquer sont interpolées dans ces tables de transformation.

5. Procédé selon l'une des revendications précédentes, **caractérisé en ce que** le procédé est exécuté sur une unité de calcul au moyen d'un logiciel de commande, l'unité de calcul comprenant une unité d'entrée pour la mise à disposition des données numériques de couleur de l'espace chromatique source du projet et une unité de sortie pour la sortie des valeurs transformées de l'espace chromatique cible ainsi qu'une mémoire dans laquelle sont stockées des tables de transformation, des valeurs pour l'espace chromatique cible étant générées au moyen du logiciel de commande pour les données de couleur d'entrée du projet en utilisant les tables de transformation et étant mises à disposition dans un ensemble de données.
